# FASCICULE DE BREVET EUROPEEN

(11) **EP 2 598 933 B1**
(45) Date de publication et mention de la délivrance du brevet: **15.02.2017**
(21) Numéro de dépôt: 11752303.5
(22) Date de dépôt: 27.07.2011
(51) Int. Cl.: G02C 5/20, G02C 5/22, G02C 5/10

(54) **PAIRE DE LUNETTES À RÉGLAGE TÉLESCOPIQUE.**
TELESKOPISCH VERSTELLBARE BRILLE
TELESCOPICALLY ADJUSTABLE PAIR OF SPECTACLES

(30) Priorité: 29.07.2010 FR 1056292
(43) Date de publication de la demande: 05.06.2013
(73) Titulaire: Louis Vuitton Malletier, 75001 Paris (FR)
(72) Inventeur: GROSJEAN, Nathalie, F-67470 Seltz (FR); COSTANTIN, Arcangelo, I-32012 Forno Di Zoldo (IT)
(74) Mandataire: Cabinet Plasseraud
(86) Numéro de dépôt international: PCT/FR2011/051804
(87) Numéro de publication internationale: WO 2012/013898

(56) Documents cités:
- EP-A1- 0 878 728
- WO-A1-99/08146
- WO-A1-2004/046790
- DE-U1- 9 301 535
- JP-A- 4 066 914
- US-A- 4 787 728
- US-A- 5 652 635

## Description

### OBJET DE L'INVENTION

L'invention concerne une paire de lunettes comportant une partie de vision et deux branches reliées chacune à la partie de vision de manière à proposer un réglage télescopique.

### CONTEXTE DE L'INVENTION

Un tel réglage vise de manière bien connue à faire varier la longueur des branches afin s'adapter à des différences morphologiques entre les personnes portant ces lunettes. Un tel réglage peut aussi servir pour une personne donnée à augmenter le maintien des lunettes sur le visage lors d'activités particulières afin d'éviter que ces dernières se déplacent sur le visage ou soient éjectées dans des cas extrêmes. L'invention concerne également cette alternative qui est particulièrement recherchée lorsque l'on souhaite pratiquer une activité sportive par exemple.

On connait usuellement une paire de lunettes de ce type dans laquelle chaque branche comprend une première partie et une deuxième partie coulissant l'une par rapport à l'autre suivant une direction de coulissement entre une position rétractée et une position déployée. Voir, par exemple, les lunettes des documents JP4066914A, US4787728, DE9301535U1, EP0878728A1, WO2004/046790A1 ou WO99/08146.

### RESUME DE L'INVENTION

L'invention vise à proposer une solution simple, robuste et bénéficiant d'une esthétique flatteuse.

Pour ce faire, conformément à l'invention, la paire de lunettes comprend en outre les caractéristiques suivantes :
- la première partie des branches comprend une première paire de doigts s'étendant suivant la direction de coulissement,
- la deuxième partie des branches comprend une deuxième paire de doigts s'étendant suivant la direction de coulissement,
- la première paire de doigts et la deuxième paire de doigts sont imbriquées l'une dans l'autre, les doigts de la première paire et les doigts de la deuxième paire se guidant mutuellement dans le mouvement de coulissement tout en empêchant un mouvement de rotation relatif.

Selon une autre caractéristique conforme à l'invention, chaque branche comprend en outre un noyau comportant quatre ailes s'étendant entre les paires de doigts et reliées les unes aux autres suivant une ligne de jonction s'étendant suivant la direction de coulissement.

Ainsi, les doigts peuvent être raccourcis tout en améliorant la précision du guidage entre la première partie et la deuxième partie.

Selon une autre caractéristique conforme à l'invention, de préférence le noyau s'étend suivant la direction de coulissement et présente en section perpendiculairement à la direction de coulissement une forme de croix orthogonale.

Le guidage entre la première partie et la deuxième partie est ainsi encore amélioré et le risque de coincement gênant le coulissement est réduit.

Selon une autre caractéristique, le noyau est de préférence fixé sur la première partie.

La simplicité de réalisation est ainsi accrue et le réglage facilité.

Selon une caractéristique complémentaire conforme à l'invention, la deuxième partie est de préférence maintenue de manière libérable sur le noyau, en position déployée de la branche.

Ainsi, l'usage de la paire de lunettes est plus agréable et ergonomique.

Selon une autre caractéristique complémentaire, la deuxième partie est de préférence maintenue de manière libérable sur le noyau, lorsque la branche est en position rétractée.

L'usage de la paire de lunettes est ainsi encore plus agréable et ergonomique.

Selon une caractéristique encore complémentaire conforme à l'invention, de préférence le noyau comprend au moins un crochet apte à venir s'encliqueter sur une tige fixée sur la deuxième partie.

Cette solution est simple, efficace et robuste.

Selon une autre caractéristique conforme à l'invention, de préférence la première partie et la deuxième partie sont en plastique, et le noyau est en métal.

La robustesse et la facilité de réalisation sont ainsi améliorés.

Selon encore une autre caractéristique conforme à l'invention, de préférence le noyau est dissimulé entre la première partie et la deuxième partie, lorsque la branche est en position rétractée.

L'esthétique est ainsi accrue.

Selon une autre caractéristique conforme à l'invention, de préférence la première partie et la deuxième partie présentent chacune une surface extérieure s'étendant dans le prolongement l'une de l'autre, sans décrochement, lorsque la branche est en position rétractée.

L'esthétique est ainsi encore accrue.

Selon une autre caractéristique conforme à l'invention, de préférence la position rétractée et la position déployée constituent deux positions extrêmes de coulissement suivant la direction de coulissement entre lesquelles tout mouvement de rotation relatif entre la première partie et la deuxième partie de chaque branche est empêché.

Ainsi, l'usage de la paire de lunettes est simple et son confort d'utilisation satisfaisant.

Selon une autre caractéristique conforme à l'invention, de préférence la position rétractée et la position déployée constituent deux positions stables, avantageusement extrêmes suivant la direction de coulissement, dans laquelle la branche est apte à rester sans action extérieure.

Ainsi, la paire de lunettes offre un confort d'utilisation satisfaisant à de multiples utilisateurs.

### BREVE DESCRIPTION DES FIGURES

D'autres caractéristiques et avantages de la présente invention apparaîtront dans la description détaillée suivante, se référant aux dessins annexés dans lesquels :
- la figure 1 illustre en perspective, partiellement éclatée, une paire de lunettes conforme à l'invention comprenant deux branches,
- la figure 2 est une vue en perspective selon la flèche repérée II à la figure 1, la paire de lunettes, les branches étant en position rétractée,
- la figure 3 illustre conformément à la figure 2 la paire de lunettes, les branches étant en position déployée,
- la figure 4 est une vue en coupe selon la ligne repérée IV-IV à la figure 2, à échelle agrandie,
- la figure 5 est une vue en coupe selon la ligne repérée V-V à la figure 1, les branches étant en position médiane de réglage pantoscopique,
- la figure 6 illustre la paire de lunettes conformément à la figure 5, les branches étant dans une première position extrême de réglage pantoscopique,
- la figure 7 illustre la paire de lunettes conformément à la figure 5, les branches étant dans une deuxième position extrême de réglage pantoscopique.

### DESCRIPTION DETAILLEE

Les différentes figures illustrent une paire de lunettes 1 comprenant essentiellement une partie de vision 2, une branche droite 10 et une branche gauche 110 chacune reliée à la partie de vision 2 par une articulation 20, 120 comprenant un élément intermédiaire 60.

La partie de vision 2 s'étend frontalement et porte des verres (non représentées).

La paire de lunettes 1 est symétrique par rapport à un plan médian de part et d'autre duquel s'étendent les deux branches 10, 110 et les deux articulations 20, 120. Par conséquent, dans la suite, sauf mention contraire, les deux branches 10, 110 et les deux articulations 20, 120 sont décrites simultanément. Les éléments symétriques l'un de l'autre ont un repère décalé de 100 l'un de l'autre.

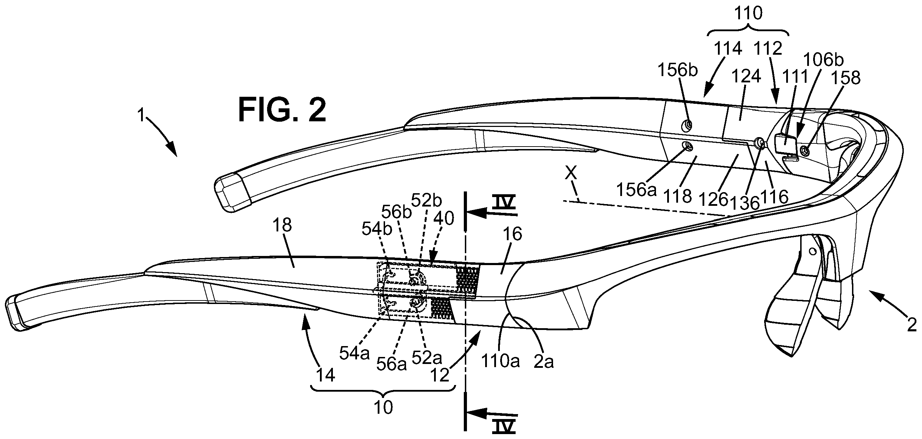

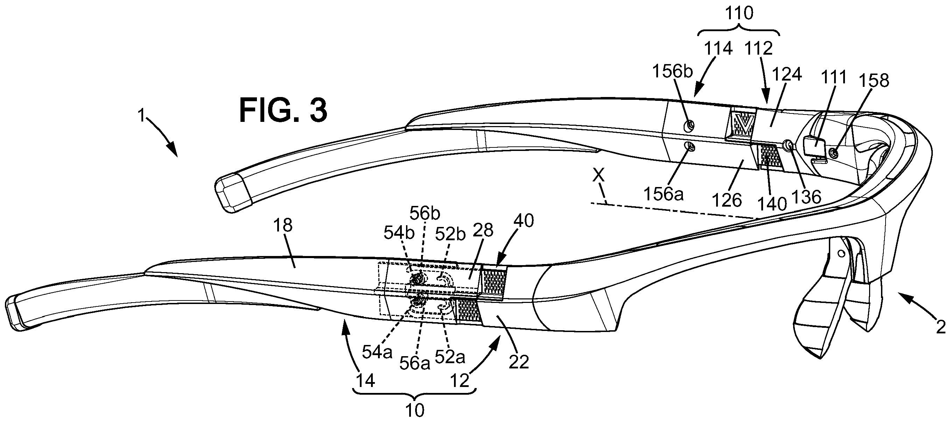

Les branches 10, 110 comprennent chacune une partie avant 12 et une partie arrière 14 disposées dans le prolongement l'une de l'autre suivant une direction de coulissement X' et apte à coulisser l'une par rapport à l'autre, de préférence sans rotation, suivant la direction de coulissement X' entre une position rétractée illustrée en particulier à la figure 2 et une position déployée illustrée à la figure 3.

La partie arrière 14, 114 s'étend suivant la direction de coulissement X' entre une extrémité arrière, libre, destinée à venir se positionner sur les oreilles d'un utilisateur et une extrémité avant à laquelle sont disposés une paire de doigts arrière 26, 28 ; 126, 128 s'étendant suivant la direction de coulissement X'.

La partie avant 12, 112 s'étend suivant la direction de coulissement X' entre une extrémité arrière à laquelle sont disposés une paire de doigts arrière 22, 24 ; 122, 124 et une extrémité avant à laquelle est disposée une languette 11, 111.

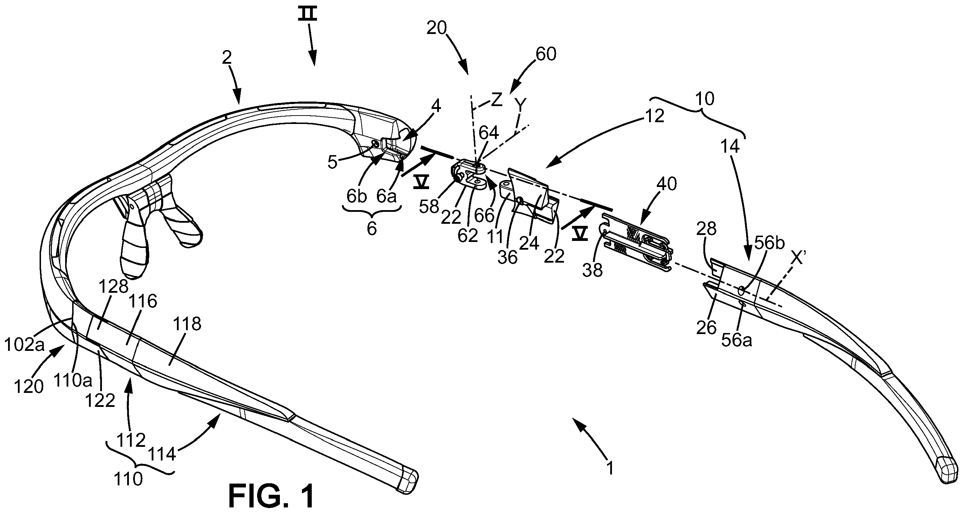

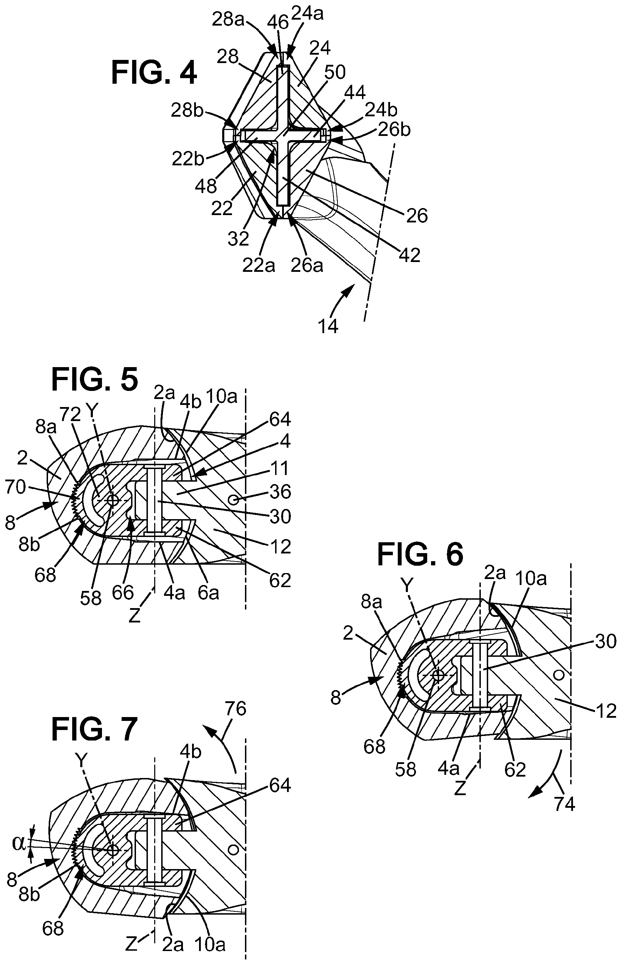

Les branches 10, 110 comprennent en outre un noyau 40, 140 s'étendant suivant la direction de coulissement X'. Tel qu'illustré en particulier à la figure 4, le noyau 40, 140 présente en section une forme de croix comprenant 4 ailes 42, 44, 46, 48 orthogonales, reliées les unes aux autres par une ligne de jonction 50. Chaque doigt 22, 24, 26, 28 vient étroitement au contact de deux ailes adjacentes. Un décrochement 22a, 22b ; 24a, 24b ; 26a, 26b ; 28a, 28b est prévu sur chacun des doigts 22, 24, 26, 28 afin de recevoir le noyau 40 dans une cavité 32 qui est close lorsque la branche 10, 110 est en position rétractée. Ainsi, le noyau 40, 140 est entièrement dissimulé à l'intérieur de la branche 10, 110 lorsque la branche est en position rétractée, tel qu'il est illustré pour la branche 110 aux figures 1 et 2.

Le noyau 40, 140 s'étend ainsi entre la paire de doigts avant 22, 24 ; 122, 124 et la paire de doigts arrières 26, 28 ; 126, 128 mais également au-delà, dans la partie avant 12 où il est fixé sur la partie avant 12, 112 de la branche 10, 110 par un pion 36, 136, et aussi dans la partie arrière 14 où il comprend des crochets avant 52a, 52b et des crochets arrière 54a, 54b, flexibles.

La position rétractée et la position déployée constituent deux positions extrêmes suivant la direction de coulissement X'. Par ailleurs, la position rétractée et la position déployée sont deux positions stables dans laquelle les branches de la paire de lunettes restent en l'absence d'action extérieure. Il peut être prévu un léger frottement pour éviter un coulissement inopiné entre la partie avant 12 et la partie arrière 14. Par ailleurs, dans le mode de réalisation illustré, tel que représenté à la figure 2 en trait interrompu, lorsque la branche 10, 110 est en position rétractée, les crochets avant 52a, 52b s'agrippent de manière libérable sur des tiges 56a, 56b fixées sur la partie arrière 14. La coopération les crochets avant 52a, 52b et les tiges 56a, 56b s'oppose au coulissement de la partie arrière 14, 114 de la branche 10, 110 suivant la direction de coulissement X' par rapport au noyau 40, 140 et à la partie avant 12, 112 de la branche 10, 110. La branche 10, 110 est ainsi maintenue de manière libérable en position rétractée.

Toutefois, les crochets avant 52a, 52b étant flexibles, en exerçant une force suffisante, l'utilisateur peut libérer les tiges 56a, 56b des crochets avant 52a, 52b et ainsi faire coulisser la partie arrière 14 par rapport à la partie avant 12 de la branche 10, 110.

De manière comparable, tel qu'illustré à la figure 3 en trait interrompu, lorsque la branche 10, 110 est en position déployée, les crochets arrière 54a, 54b s'agrippent de manière libérable sur les tiges 56a, 56b. La coopération les crochets arrière 54a, 54b et les tiges 56a, 56b maintient ainsi la branche 10, 110 de manière libérable en position déployée.

De manière avantageuse, le noyau 40, 140 est en métal, tandis que la partie avant 12, 112 et la partie arrière 14, 114 de la branche 10, 110 sont en plastique.

Il sera en outre noté que lorsque la branche 10, 110 est en position rétractée la surface extérieure 16, 116 de la partie avant 12, 112 et la surface extérieure 18, 118 de la partie arrière 14, 114 de la branche 10, 110 s'étendent parfaitement dans le prolongement l'une de l'autre, sans décrochement, l'extrémité libre des doigts avant 22, 24 ; 122, 124 venant buter contre la partie arrière 14, 114 suivant la direction de coulissement X' et l'extrémité libre des doigts arrière 26, 28 ;126, 128 venant buter contre la partie avant 12, 112 suivant la direction de coulissement X'. En revanche, lorsque la branche 10, 110 est en position déployée, il existe des jours d'une part entre les doigts avant 22, 24 ; 122, 124 et la partie arrière 14, 114 et d'autre part entre les doigts arrière 26, 28 ; 126, 128 et la partie avant 12, 112, laissant apparaître le noyau 40, 140.

La longueur des doigts avant 22, 24 ; 122, 124 et la longueur des doigts arrière 26, 28 ; 126, 128 suivant la direction de coulissement X' correspond de préférence sensiblement à la distance dont coulisse la partie arrière 14, 114 entre sa position rétracté et sa position déployée. Ainsi, lorsque la branche 40, 140 est en position déployée, les doigts avant 22, 24 ; 122, 124 et les doigts arrière 26, 28 ; 126, 128 se terminent sensiblement au même niveau suivant la direction de coulissement X'.

D'autre part, la partie avant 12, 112 de la branche 10, 110 est montée pivotante sur l'élément intermédiaire 60 autour d'un axe de repliement Z sensiblement perpendiculaire à la direction de coulissement X' entre une position dépliée dans laquelle la direction de coulissement X' est sensiblement parallèle à une direction longitudinale X, tel qu'illustré en particulier aux figures 1 à 3, et une position repliée dans laquelle la branche 10, 110 s'étend sensiblement le long de la partie de vision 2.

Pour ce faire, l'élément intermédiaire 60 et la partie avant 12, 112 de la branche 10, 110 sont reliés par une tige 30 s'étendant suivant l'axe de repliement Z. L'élément intermédiaire 60 présente deux bras 62, 64 s'étendant suivant la direction longitudinale X entre lesquels est ménagée une fente 66 dans laquelle est reçue la languette 11. La tige 30 est reçue dans des alésages disposés à travers la languette 11 et les bras 62, 64.

Par ailleurs, l'élément intermédiaire 60 est reçu dans un logement 4 creusé dans la partie de vision 2. L'élément intermédiaire 60 est monté pivotant par rapport à la partie de vision 2 autour d'un axe de réglage pantoscopique Y, sensiblement perpendiculaire à la direction longitudinale X et à l'axe de repliement Z entre une première position extrême illustré à la figure 6 et une deuxième position extrême illustrée à la figure 7.

Pour ce faire, une tige 58 s'étendant suivant l'axe de réglage pantoscopique Y traverse une partie principale 72 de l'élément intermédiaire 60 et est reçu dans un alésage 5 de la partie de vision 2.

Afin de maintenir l'élément intermédiaire 60, et la branche 10, 110 portée par l'élément intermédiaire 60, par rapport à la partie avant 2 dans une position angulaire déterminée autour de l'axe de réglage pantoscopique Y, l'élément intermédiaire 60 comprend en outre un secteur denté 68 coopérant avec un secteur denté 8 réalisé dans la partie de vision 2, au fond du logement 4.

Le passage d'une position de réglage angulaire autour de l'axe pantoscopique Y à une autre est facilité du fait que le secteur denté 68 est porté par une partie flexible 70 obtenue de matière avec la partie principale 72, mais de faible épaisseur, de sorte que le secteur denté est élastiquement mobile radialement à l'axe de réglage pantoscopique Y par rapport à ladite partie principale 72.

Le secteur denté 8 de la partie de vision 2 s'étend entre une première dent extrême 8a et une deuxième dent extrême 8b et comprend deux dents de plus que le secteur denté 58 de l'élément intermédiaire 60.

Ainsi, lorsque l'élément pantoscopique 60 est dans une position de réglage moyenne, illustrée à la figure 5, le secteur denté 58 s'engage avec toutes les dents du secteur denté 8, sauf les deux dents extrêmes 8a, 8b.

Lorsque l'élément intermédiaire 60 est pivoté dans un premier sens 74 autour de l'axe de réglage pantoscopique Y, le secteur denté 58 se déplace d'une dent par rapport au secteur denté 8, de sorte qu'il s'engage alors dans la dent extrême 8a du secteur denté 8, tel qu'illustré à la figure 6. La partie principale 72 de l'élément intermédiaire 60 vient alors en butée contre une paroi inférieure 4a du logement 4, à distance de ladite première dent extrême 8a, ce qui limite la rotation de l'élément intermédiaire 60 par rapport à la partie de vision 2 autour de l'axe de réglage pantoscopique Y dans le premier sens 74.

Inversement, lorsqu'à partir de la position de réglage moyenne illustrée à la figure 5, l'élément intermédiaire 60 est pivoté dans un deuxième sens 76, opposé au premier sens 74, autour de l'axe de réglage pantoscopique Y, le secteur denté 58 se déplace d'une dent par rapport au secteur denté 8 et s'engage dans la dent extrême 8b du secteur denté 8, tel qu'illustré à la figure 7. La partie principale 72 de l'élément intermédiaire 60 vient alors en butée contre une paroi supérieure 4b du logement 4, à distance de ladite première dent extrême 8b, ce qui limite la rotation de l'élément intermédiaire 60 par rapport à la partie de vision 2 autour de l'axe de réglage pantoscopique Y dans le deuxième sens 74.

L'écart angulaire α entre deux dents consécutives des secteurs dentés 8, 58, respectivement de la partie de vision 2 et de l'élément intermédiaire 60 est avantageusement compris entre 3 degrés et 7 degrés, de préférence sensiblement égal à 5 degrés.

Il sera enfin remarqué que le logement 4 présente une ouverture 6 comportant une portion frontale 6a s'étendant sensiblement perpendiculairement à la direction longitudinale X et une portion latérale 6b, 106b s'étendant sensiblement perpendiculairement à la direction de l'axe de réglage pantoscopique Y, la portion frontale 6a et la portion latérale 6b étant adjacentes.

Les portions latérales 6b ,106b sont en regard l'une de l'autre, autrement dit elles seront en regard du visage d'un utilisateur. En outre, chacune des portions latérales 6b, 106b s'étend en regard de la fente 66 et lui correspond, afin de recevoir la languette 11, sans jeu important suivant la direction de l'axe de repliement Z, lorsque la banche 10, 110 est repliée.

En outre, la branche 10, 110 et la partie de vision 2 présente chacune une surface frontale respective 10a, 2a ; 110a, 102a ayant une forme circulaire centrée sur l'axe de réglage pantoscopique Y, disposées en regard et proches l'une de l'autre lorsque la branche 10, 110 est en position dépliée. Ainsi, la portion frontale 6a de l'ouverture 6 est dissimulée par la branche 10, 110, lorsque ladite branche est en position dépliée, tel qu'illustré en particulier aux figures 5 à 7.

De plus, l'élément intermédiaire 60 est toujours reçu entièrement dans le logement 4, il ne traverse pas l'ouverture 6 et est même en retrait de ladite ouverture 6. Par conséquent, l'élément intermédiaire 60 n'est pratiquement pas visible.

Bien entendu, l'invention n'est nullement limitée au mode de réalisation qui vient d'être décrit à titre illustratif non limitatif. Ainsi, bien que cela ne soit pas préféré, le logement 4 et le secteur denté 8 pourraient être ménagés sur la partie avant 12, 112 de la branche 10, 110, et la languette 11 pourrait être solidaire de la partie de vision 2. L'élément intermédiaire 60 serait alors retourné devant derrière.

En outre, bien que cela ne soit pas préféré, de manière indépendante ou combinée, les bras 62, 64 et la languette 11 pourraient être inversés, de sorte que la languette 11 soit solidaire de l'élément intermédiaire 60 et les bras 62, 64 soient solidaires de la partie avant 12, 112 de la branche 10, 110.

## Revendications

1. Paire de lunettes (1) comportant une partie de vision (2) et deux branches (10, 110) reliées chacune à la partie de vision (2), chaque branche (10, 110) comprenant une première partie (12, 112) et une deuxième partie (14, 114) coulissant l'une par rapport à l'autre suivant une direction de coulissement (X') entre une position rétractée et une position déployée, et dans laquelle :
- la première partie (12, 112) comprend une première paire de doigts (22, 24 ; 122, 124) s'étendant suivant la direction de coulissement (X'),
- la deuxième partie (14, 114) comprend une deuxième paire de doigts (26, 28 ; 126, 128) s'étendant suivant la direction de coulissement (X'),
- la première paire de doigts (22, 24 ; 122, 124) et la deuxième paire de doigts (26, 28 ; 126, 128) sont imbriquées l'une dans l'autre, les doigts de la première paire et les doigts de la deuxième paire se guidant mutuellement dans le mouvement de coulissement tout en empêchant un mouvement de rotation relatif, ladite paire de lunettes (1) étant **caractérisée en ce que** :
- chaque branche (10, 110) comprend en outre un noyau (40, 140) comportant quatre ailes (42, 44, 46, 48) s'étendant entre les paires de doigts et reliées les unes aux autres suivant une ligne de jonction (50) s'étendant suivant la direction de coulissement (X').

2. Paire de lunettes selon la revendication 1 dans laquelle le noyau (40, 140) s'étend suivant la direction de coulissement (X') et présente en section perpendiculairement à la direction de coulissement (X') une forme de croix orthogonale.

3. Paire de lunettes selon l'une des revendications 1 ou 2 dans laquelle le noyau (40) est fixé sur la première partie (12, 112).

4. Paire de lunettes selon la revendication 3 dans laquelle la deuxième partie (14, 114) est maintenue de manière libérable sur le noyau (40, 140), lorsque la branche (10, 110) est en position déployée.

5. Paire de lunettes selon la revendication 3 ou la revendication 4 dans laquelle la deuxième partie (14, 114) est maintenue de manière libérable sur le noyau (40, 140), lorsque la branche (10, 110) est en position rétractée.

6. Paire de lunettes selon la revendication 4 ou la revendication 5 dans laquelle le noyau (40) comprend au moins un crochet (52a, 52b) apte à venir s'encliqueter sur une tige (56a, 56b) fixée sur la deuxième partie (14, 114).

7. Paire de lunettes selon l'une quelconque des revendications 1 à 6 dans laquelle la première partie (12, 112) et la deuxième partie (14, 114) sont en plastique, et le noyau (40, 140) est en métal.

8. Paire de lunettes selon quelconque des revendications 1 à 7 dans laquelle le noyau (40, 140) est dissimulé entre la première partie (12, 112) et la deuxième partie (14, 114), lorsque la branche (10, 110) est en position rétractée.

9. Paire de lunettes selon l'une quelconque des revendications précédentes dans laquelle la première partie (12, 112) et la deuxième partie (14, 114) présentent chacune une surface extérieure (16, 18 ; 116 118) s'étendant dans le prolongement l'une de l'autre, sans décrochement, lorsque la branche (10, 110) est en position rétractée.

10. Paire de lunettes selon l'une quelconque des revendications précédentes dans laquelle la position rétractée et la position déployée constituent deux positions extrêmes de coulissement suivant la direction de coulissement (X') entre lesquelles tout mouvement de rotation relatif entre la première partie (12, 112) et la deuxième partie (14, 114) de chaque branche est empêché.

11. Paire de lunettes selon l'une quelconque des revendications précédentes dans laquelle la position rétractée et la position déployée constituent deux positions stables.

## Patentansprüche

1. Brille (1) mit einem Sehabschnitt (2) und zwei Bügeln (10, 110), die jeweils mit dem Sehabschnitt (2) verbunden sind, wobei jeder Bügel (10, 110) einen ersten Teil (12, 112) und einen zweiten Teil (14, 114) aufweist, die in eine Schieberichtung (X') zwischen einer eingezogenen Position und einer entfalteten Position relativ zueinander verschiebbar sind, wobei
- der erste Teil (12, 112) ein erstes Paar von Fingern (22, 24; 122, 124) aufweist, die sich in die Schieberichtung (X') erstrecken;
- der zweite Teil (14, 114) ein zweites Paar von Fingern (26, 28; 126, 128) aufweist, die sich in die Schieberichtung (X') erstrecken;
- das erste Paar von Fingern (22, 24; 122, 124) und das zweite Paar von Fingern (26, 28; 126, 128) ineinandergreifend sind, wobei sich die Finger des ersten Paars und die Finger des zweiten Paars bei der Schiebebewegung unter Verhinderung einer relativen Drehbewegung zueinander gegenseitig führen, wobei die Brille (1) **dadurch gekennzeichnet ist, dass**
- jeder Bügel (10, 110) ferner einen Kern (40, 140) mit vier Flügeln (42, 44, 46, 48) aufweist, die sich zwischen den Fingerpaaren erstrecken und entlang einer sich in die Schieberichtung (X') erstreckenden Verbindungslinie (50) miteinander verbunden sind.

2. Brille nach Anspruch 1, wobei der Kern (40, 140) sich in die Schieberichtung (X') erstreckt und senkrecht zur Schieberichtung (X') einen Querschnitt in Form eines orthogonalen Kreuzes aufweist.

3. Brille nach einem der Ansprüche 1 oder 2, wobei der Kern (40) an dem ersten Teil (12, 112) befestigt ist.

4. Brille nach Anspruch 3, wobei der zweite Teil (14, 114) auf freigebbare Weise an dem Kern (40, 140) gehalten wird, wenn der Bügel (10, 110) in der entfalteten Position ist.

5. Brille nach Anspruch 3 oder 4, wobei der zweite Teil (14, 114) auf freigebbare Weise an dem Kern (40, 140) gehalten wird, wenn der Bügel (10, 110) in der eingezogenen Position ist.

6. Brille nach Anspruch 4 oder 5, wobei der Kern (40) mindestens einen Haken (52a, 52b) aufweist, der an einem Stift (56a, 56b), der an dem zweiten Teil (14, 114) angebracht ist, zum Einrasten kommen kann.

7. Brille nach einem der Ansprüche 1 bis 6, wobei der erste Teil (12, 112) und der zweite Teil (14, 114) aus einem Kunststoffmaterial sind und der Kern (40, 140) aus einem Metall ist.

8. Brille nach einem der Ansprüche 1 bis 7, wobei der Kern (40, 140) zwischen dem ersten Teil (12, 112) und dem zweiten Teil (14, 114) verborgen ist, wenn der Bügel (10, 110) in der eingezogenen Position ist.

9. Brille nach einem der vorstehenden Ansprüche, wobei der erste Teil (12, 112) und der zweite Teil (14, 114) jeweils eine Außenfläche (16, 18; 116, 118) haben, die sich ohne rückspringende Stufe in der Verlängerung der einen zu der anderen erstreckt, wenn der Bügel (10, 110) in der eingezogenen Position ist.

10. Brille nach einem der vorstehenden Ansprüche, wobei die eingezogene Position und die entfaltete Position zwei Endpositionen eines Schiebens in die Schieberichtung (X') bilden, zwischen welchen jedwede relative Drehbewegung zwischen dem ersten Teil (12, 112) und dem zweiten Teil (14, 114) jedes Bügels verhindert ist.

11. Brille nach einem der vorstehenden Ansprüche, wobei die eingezogene Position und die entfaltete Position zwei stabile Positionen bilden.

## Claims

1. Pair of spectacles (1) comprising a viewing portion (2) and two side arms (10, 110) each connected to the viewing portion (2), each side arm (10, 110) comprising a first portion (12, 112) and a second portion (14, 114) sliding relative to one another in a sliding direction (X') between a retracted position and an extended position, and wherein:
- the first portion (12, 112) comprises a first pair of legs (22, 24; 122, 124) extending in the sliding direction (X'),
- the second portion (14, 114) comprises a second pair of legs (26, 28; 126, 128) extending in the sliding direction (X'),
- the first pair of legs (22, 24; 122, 124) and the second pair of legs (26, 28; 126, 128) are mutually engaged, the legs in the first pair and the legs in the second pair guiding each other in their sliding motion while preventing any relative rotational movement, said pair of spectacles (1) being **characterized in that**:
- each arm (10, 110) additionally comprises a core (40, 140) comprising four wings (42, 44, 46, 48) extending between the pairs of legs and connected to each other at a join line (50) extending along the sliding direction (X').

2. Pair of spectacles according to claim 1, wherein the core (40, 140) extends along the sliding direction (X') and has a cross-section perpendicular to the sliding direction (X') that is in the form of a cross with orthogonal arms.

3. Pair of spectacles according to claim 1 or claim 2, wherein the core (40) is attached to the first portion (12, 112).

4. Pair of spectacles according to claim 3, wherein the second portion (14, 114) is retained in a releasable manner on the core (40, 140) when the arm (10, 110) is in the extended position.

5. Pair of spectacles according to claim 3 or claim 4, wherein the second portion (14, 114) is retained in a releasable manner on the core (40, 140) when the arm (10, 110) is in the retracted position.

6. Pair of spectacles according to claim 4 or claim 5, wherein the core (40) comprises at least one hook (52a, 52b) suitable for catching on a pin (56a, 56b) attached to the second portion (14, 114).

7. Pair of spectacles according to any one of claims 1 to 6, wherein the first portion (12, 112) and the second portion (14, 114) are of plastic, and the core (40, 140) is of metal.

8. Pair of spectacles according to any one of claims 1 to 7, wherein the core (40, 140) is concealed between the first portion (12, 112) and the second portion (14, 114) when the arm (10, 110) is in the retracted position.

9. Pair of spectacles according to any one of the preceding claims, wherein the first portion (12, 112) and the second portion (14, 114) each present an outer surface (16, 18; 116, 118) that is flush with the outer surface of the other when the arm (10, 110) is in the retracted position.

10. Pair of spectacles according to any one of preceding claims, wherein the retracted position and the extended position constitute two extreme sliding positions along the sliding direction (X'), between which any relative rotational motion between the first portion (12, 112) and the second portion (14, 114) of each arm is prevented.

11. Pair of spectacles according to any one of the preceding claims, wherein the retracted position and the extended position constitute two stable positions.
